# FASCICULE DE BREVET EUROPEEN

(11) **EP 3 334 371 B1**
(45) Date de publication et mention de la délivrance du brevet: **05.08.2020**
(21) Numéro de dépôt: 16744358.9
(22) Date de dépôt: 25.07.2016
(51) Int. Cl.: A61C 13/00, A61C 5/00, A61C 13/107, A44C 15/00

(54) **MAQUETTE POUR RESTAURATION DENTAIRE ESTHÉTIQUE, DISPOSITIF DE PARURE DENTAIRE**
MODELL FÜR KOSMETISCHE ZAHNRESTAURATION, ZAHNSCHMUCKSTÜCK
MODEL FOR COSMETIC DENTAL RESTORATION, DENTAL JEWELLERY DEVICE

(30) Priorité: 10.08.2015 FR 1557643; 03.02.2016 FR 1650857
(43) Date de publication de la demande: 20.06.2018
(73) Titulaire: Lyra Holding, 1060 Saint-Gilles (BE)
(72) Inventeur: STEMMER, Armand, 75016 Paris (FR); LENNES, Jean-Baptiste, 95340 Ronquerolles (FR); OHANA, Michael, 06220 Vallauris (FR); DEVILLE, Charles Louis Marie, 69005 Lyon (FR)
(74) Mandataire: Novaimo
(86) Numéro de dépôt international: PCT/EP2016/067636
(87) Numéro de publication internationale: WO 2017/025304

(56) Documents cités:
- EP-A1- 0 110 797
- CN-A- 104 116 569
- JP-A- 2013 230 232
- US-A- 5 324 198
- US-A1- 2002 150 859
- US-A1- 2007 059 667
- US-A1- 2010 281 370
- US-A1- 2012 178 045
- US-A1- 2013 226 534

## Description

### Domaine technique de l'invention

L'invention est dans le domaine dentaire et porte sur un procédé et un système de réalisation d'une maquette de restauration dentaire esthétique d'un patient ou d'un dispositif de parure dentaire. Elle porte aussi sur un dispositif de commande pour la fabrication d'une maquette d'une restauration esthétique dentaire d'un patient ou d'un dispositif de parure dentaire. Enfin, elle porte aussi sur un dispositif de parure dentaire en tant que tel.

### État de la technique

Quand un patient souhaite corriger des défauts esthétiques sur une ou plusieurs dents, il est notamment connu, en complément d'un éventuel traitement orthodontique, de réaliser une restauration dentaire esthétique au moyen de facettes en céramique. Les facettes sont fixées par collage sur les faces avant visibles des dents afin d'obtenir l'effet esthétique souhaité. Une telle fixation s'accompagne d'une modification des dents existantes, notamment leur surface antérieure, pour les préparer à accueillir les facettes, notamment sans surépaisseur, avant de procéder au collage des facettes. Cette opération comprend par exemple un ponçage de ces faces avant visibles des dents pour réduire leur épaisseur et former un logement de réception des facettes, et elle est donc définitive et irréversible. De plus, le collage associé des facettes est aussi définitif, en général à l'aide d'une colle puissante engendrant une forte adhésion irréversible des deux surfaces en contact. Il n'est donc pas possible d'enlever les facettes et de retrouver les dents dans leur état initial, non détérioré, avant la mise en oeuvre de la restauration esthétique.

Un tel traitement esthétique est coûteux et irréversible.

Avant de s'engager dans un tel traitement esthétique, qui par nature est subjectif, le patient a besoin de connaître et visualiser au mieux le résultat final envisageable et de l'approuver.

Une première solution consiste à présenter au patient une maquette virtuelle de restauration dentaire en retouchant une photo du patient de sorte à s'approcher de façon optimale du résultat souhaité. Cette méthode permet au patient de visualiser virtuellement le résultat final envisageable de la restauration de façon simple, rapide et peu coûteuse. Elle ne permet toutefois pas au patient d'appréhender de façon suffisamment réaliste ce résultat.

Une deuxième solution consiste en la réalisation d'une ou plusieurs maquettes provisoires ou « mock up », par exemple par la mise en oeuvre des étapes suivantes :
- réalisation d'une empreinte de la dentition et de la mâchoire du patient, par exemple en alginate ou en silicone ;
- moulage de l'empreinte afin d'obtenir un modèle tridimensionnel initial de la dentition, par exemple en plâtre ;
- réalisation d'un « wax up » en cire sur le modèle en plâtre, c'est-à-dire d'une maquette de la dentition finale telle que souhaitée, par ajout de cire sur le modèle en plâtre initial ;
- fabrication d'une clef en silicone par prise d'empreinte du wax up et perforation de l'empreinte au niveau postérieur ;
- injection d'un composite dans la clef puis mise en bouche de celle-ci, la perforation postérieure de la clef permettant de vérifier le positionnement en bouche ;
- après durcissement du composite, retrait de la clef, ce qui permet de poser une maquette provisoire, ou « mock up », en composite directement sur les dents ;
- éventuellement traitement de coloration et lustrage du mock up (ou maquette provisoire), afin de lui donner un aspect plus naturel.

La maquette, ou mock up, réalisée en composite, est façonnée à la forme souhaitée directement sur les dents. Elle peut ensuite être appliquée sur le patient par-dessus ses dents non traitées, ses dents existantes en l'état. Cela lui permet d'évaluer in vivo et avec un certain réalisme le projet de restauration esthétique. A ce stade, il est encore possible d'apporter des modifications au projet esthétique et de réaliser une, voire plusieurs autres maquettes (ou mock up) provisoires. Une fois le projet esthétique validé par le patient et lui ayant donné pleinement satisfaction, notamment sur les plans esthétique et fonctionnel, le traitement final est préparé puis appliqué au patient pour obtenir le même résultat esthétique qu'il aura pu visualiser et valider grâce au mockup.

La réalisation d'une ou plusieurs maquettes (ou mock up) provisoires est un processus complexe, long et coûteux.

### Objet de l'invention

Du fait des remarques précédentes, la présente invention a pour but de proposer une solution moins coûteuse et plus simple pour améliorer le sourire d'une personne.

Plus précisément, un but de la présente invention est de proposer une solution pour réaliser une maquette d'une restauration esthétique dentaire d'un patient, qui ne comprend pas tout ou partie des inconvénients précédents.

A cet effet, l'invention concerne un procédé de réalisation d'une maquette d'une restauration dentaire esthétique d'un patient, caractérisé en ce qu'il comprend une étape d'élaboration d'un fichier de données numériques représentant la maquette dentaire de présentation artificielle de la restauration, adaptée pour être mise en bouche et portée provisoirement sur au moins une partie de la dentition du patient, et une étape de fabrication de la maquette directement à partir du fichier de données numériques produit.

Le procédé peut comprendre les étapes suivantes :
- obtention de données numériques initiales représentant au moins une partie de la dentition ayant une apparence esthétique initiale ;
- représentation virtuelle au moins partielle de ladite dentition dans son apparence esthétique initiale, à partir des données initiales ;
- modification de l'apparence esthétique virtuelle des dents pour obtenir une apparence esthétique modifiée.

L'étape de modification peut comprendre la modification d'au moins une partie des caractéristiques dentaires du groupe comportant une couleur de dent, une forme de dent, une taille de dent et une dimension d'espace interdentaire.

L'étape de modification peut être adaptée pour apporter des modifications esthétiques correspondant à des modifications susceptibles d'être apportées ultérieurement par la pose de facettes sur des dents.

La maquette dentaire peut comprendre au moins un logement épousant au moins partiellement la forme d'une dent pour permettre le clippage de la maquette sur la dent.

Le procédé peut comprendre les sous-étapes suivantes :
- Obtention de données numériques représentant la forme occlusale de la maquette au niveau d'au moins une dent support sur laquelle la maquette est apte à se clipper, en considérant le négatif d'un modèle virtuel représentant tout ou partie de la dentition du patient ;
- Obtention de données numériques représentant tout ou partie des extrémités gingivales de la maquette, côtés vestibulaire et/ou lingual.

La maquette peut être adaptée pour être clippée sur l'arcade dentaire sans fonction de correction de malposition dentaire.

La maquette peut comprendre des parois comportant une partie avant reliée à une partie arrière et seule la partie avant peut être complète.

La maquette peut être réalisée en un matériau recyclable et/ou biocompatible.

La maquette peut être fabriquée par une technique d'addition de matière, notamment par impression tridimensionnelle.

La maquette peut être fabriquée par une technique de soustraction de matière, notamment par usinage d'un bloc de matière ou découpe laser ou par jet d'eau.

L'invention porte aussi sur un dispositif de fabrication d'une maquette d'une restauration esthétique dentaire d'un patient, caractérisé en ce qu'il comprend un module d'obtention de données numériques initiales représentant au moins une partie de la dentition du patient ayant une apparence esthétique initiale, un module de création de modèles virtuels, représentant tout ou partie de la dentition du patient respectivement dans son apparence esthétique initiale et dans au moins une apparence esthétique modifiée par rapport à l'apparence initiale, et une unité centrale (UC) de traitement et de commande pour la mise en œuvre d'un procédé de réalisation d'une maquette d'une restauration dentaire esthétique d'un patient selon l'une des revendications précédentes.

Le dispositif peut comprendre un module de représentation virtuelle au moins partielle de la dentition dans son apparence initiale, à partir des données initiales, et un module de modification de l'aspect esthétique virtuel des dents pour obtenir un aspect esthétique modifié.

L'invention porte aussi sur un système de réalisation d'une maquette d'une restauration dentaire esthétique d'un patient, comportant un dispositif de fabrication d'une maquette dentaire et le dispositif de commande décrit ci-dessus.

Le système peut comprendre un dispositif de capture d'images.

L'invention porte aussi sur un programme d'ordinateur comprenant des instructions de code de programme pour commander l'exécution des étapes du procédé décrit précédemment, lorsque ledit programme est exécuté par une unité de traitement.

A cet effet, l'invention porte aussi sur un dispositif de parure dentaire destiné à être porté de façon amovible et réutilisable, caractérisé en ce qu'il comporte au moins une face antérieure de dent, non transparente, destinée à être superposée sur la face vestibulaire d'une dent existante, et des moyens de fixation amovible du dispositif de parure dentaire sur au moins une des dents existantes servant de support.

Le dispositif de parure dentaire peut comprendre une pluralité de faces antérieures de dents destinées à être superposées sur les faces antérieures d'une pluralité de dents existantes juxtaposées.

Le dispositif de parure dentaire peut comprendre au moins un logement de réception d'une dent support existante, avantageusement au moins deux logements, comportant une paroi antérieure portant une face antérieure de dent et une paroi postérieure opposée de plus petite surface que la face antérieure, destinée à venir recouvrir la partie extrême de la face linguale de la même dent existante, notamment en ayant un impact minimal sur l'occlusion, les deux parois antérieure et postérieure étant reliées entre elles et agencées pour pincer la dent existante servant de support pour permettre la fixation du dispositif de parure dentaire sur ladite dent existante par clippage.

Le logement peut épouser au moins partiellement la forme de la dent existante servant de support.

Le dispositif de parure dentaire peut présenter une face antérieure comprenant une épaisseur variable dans toutes les directions, et/ou présenter plusieurs faces antérieures présentant des épaisseurs différentes entre elles.

Le dispositif de parure dentaire peut présenter une face antérieure et éventuellement une face postérieure destinée à venir en contact direct avec une dent existante et/ou destinée à venir se fixer de manière amovible sur une dent existante sans traitement ni modification préalable de ladite dent existante.

Seule la paroi antérieure de dent du dispositif de parure dentaire peut recouvrir complètement la surface d'une dent existante.

Le dispositif de parure dentaire peut comprendre au moins une face antérieure de dent destinée à être superposée sur la face vestibulaire d'une dent existante et ne pas comprenant de face postérieure destinée à recouvrir la face linguale de la même dent existante.

Ladite face antérieure de dent destinée à être superposée sur la face vestibulaire d'une dent existante peut avoir une teinte de dent réelle et/ou être réalisée en un matériau biocompatible.

Le moyen de fixation amovible peut comprendre une colle et/ou un clip et/ou un moyen d'ancrage et/ou d'emboitement.

Ladite face antérieure du dispositif de parure dentaire peut porter un élément de décoration, notamment une représentation graphique sérigraphiée ou au moins une couche colorante recouvrant la totalité de la face antérieure ou une peinture de décoration comme une peinture fluorescente ou phosphorescente, ou le dispositif de parure dentaire peut comprendre un matériau intégrant une propriété de décoration comme des éléments fluorescents ou phosphorescents.

Les parois du dispositif de parure dentaire peuvent n'exercer aucune force de déplacement des dents existantes.

L'invention porte aussi sur une utilisation du dispositif de parure dentaire tel que décrit précédemment, pour modifier temporairement l'aspect esthétique d'une dentition, ladite utilisation étant renouvelable, ou pour visualiser le résultat futur d'un traitement dentaire, ledit dispositif de parure dentaire se fixant de manière amovible sur les dents existantes sans exercer de traitement dentaire.

L'invention est plus précisément définie par les revendications.

### Description sommaire des dessins

Ces objets, caractéristiques et avantages de la présente invention seront exposés en détail dans la description suivante d'un mode de réalisation particulier fait à titre non-limitatif en relation avec les figures jointes parmi lesquelles :

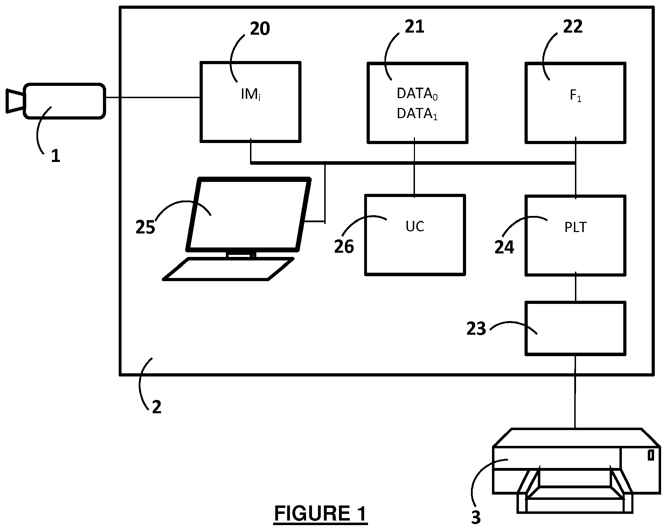

La figure 1 représente un schéma du système de réalisation d'une maquette d'une restauration esthétique dentaire d'un patient, selon un exemple de réalisation de l'invention.

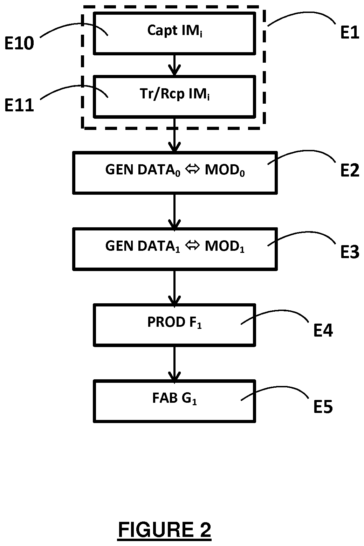

La figure 2 représente un organigramme des étapes du procédé de réalisation d'une maquette d'une restauration esthétique dentaire d'un patient, selon un mode de réalisation particulier de l'invention.
La figure 3 représente une vue en trois dimensions depuis la face postérieure d'un dispositif de parure dentaire, selon un exemple particulier de réalisation.
Les figures 4A à 4D représentent des vues avant d'un dispositif de parure dentaire portant des éléments de décoration, selon différents exemples particuliers de réalisation.

### Description de modes préférentiels de l'invention

Le procédé de l'invention permet la réalisation d'une maquette d'une restauration dentaire esthétique d'un patient. Il comprend une opération de fabrication d'une telle maquette qui permet une présentation artificielle, ou une simulation, de la restauration dentaire esthétique future envisagée.

Par « restauration dentaire esthétique », on entend désigner tout traitement dentaire à destination esthétique sans orthodontie, c'est-à-dire sans traitement de correction de malpositions de dents par application d'une force continue sur les dents pour provoquer leur déplacement. Par exemple, la restauration dentaire esthétique peut être réalisée par la fixation de facettes en céramique (ou autre matériau adapté) sur la face visible d'une ou plusieurs dents. L'intervention esthétique par la restauration dentaire esthétique a pour effet essentiel de modifier l'aspect esthétique de la ou les dents concerné(es). Elle ne doit pas être confondue avec un traitement dentaire non esthétique, dans lequel une action plus profonde sur une dent est réalisée, non uniquement sur la face visible, soit par exemple par le déplacement d'une dent existante complète, soit par la reconstitution d'un volume manquant d'une dent existante abimée, par exemple par l'intermédiaire d'une couronne ou d'une prothèse. Dans ce dernier cas, le traitement dentaire a pour fonction principal de permettre à la dent de remplir sa fonction naturelle, notamment de mastication d'aliments. Une prothèse doit donc répondre au problème technique principal de supporter les efforts importants lors de la mastication. Au contraire, dans une restauration dentaire esthétique selon l'invention, les dents existantes concernées continuent de remplir la fonction de mastication comme auparavant, seul leur aspect visuel étant transformé. Naturellement, la restauration dentaire esthétique de l'invention peut être combinée avec un traitement dentaire non esthétique, l'ajout de facettes pouvant par exemple venir en complément de l'ajout d'une prothèse pour compléter tout ou partie d'une dent.

Par « présentation artificielle » ou « simulation » de la restauration dentaire esthétique, on entend signifier que la maquette dentaire, qui va être décrite ci-après, reproduit artificiellement le résultat envisagé de la restauration dentaire esthétique future.

Une « maquette dentaire », ou plus simplement « maquette », peut se présenter comme un appareil dentaire, qui reproduit toute la surface antérieure des dents concernées par la restauration esthétique, c'est-à-dire la face visible des dents, et qui intègre un dispositif de fixation sur les dents réelles, c'est-à-dire les dents existantes. Selon un mode de réalisation, une telle maquette comprend un ou plusieurs logements ou cavités destinés à un clippage sur au moins une partie d'une dent d'un patient. Un tel logement est délimité par la paroi antérieure visible de la maquette et par au moins une partie de paroi opposée, du côté lingual, qui lui est reliée par l'intermédiaire d'une paroi occlusale qui s'étend sur la surface supérieure, voire latérale, de la dent, ces parois complémentaires remplissant la fonction de clippage en combinaison. Ces parois sont de préférence peu épaisses. La maquette peut avoir différentes formes, comprendre différents matériaux et concerner tout ou partie des dents d'un patient. Un logement peut ne contenir qu'une partie des dents, voire une dent entière. Il peut y avoir plusieurs logements, pour améliorer le maintien de la maquette. On appelle « dent(s) support(s) » la ou les dents existante(s) reçue(s) dans des logements de la maquette. Il peut y avoir une seule maquette destinée à l'une des dentitions supérieure ou inférieure, ou plus fréquemment deux maquettes pour respectivement la dentition supérieure et la dentition inférieure du patient.

La maquette dentaire est adaptée pour être mise en bouche et portée provisoirement sur au moins une partie de la dentition du patient. Elle est adaptée pour une fixation temporaire sur la dentition, sans exercer de fonction de correction de malposition dentaire, autrement dit sans fonction d'orthodontie. Une fois mise en bouche sur une ou plusieurs dents du patient, elle n'exerce pas sur celles-ci de force suffisante pour provoquer un déplacement des dents au cours du temps.

Selon un autre mode de réalisation, la maquette est réduite à sa forme minimale et ne consiste qu'en la face antérieure visible des dents. Dans ce cas, elle peut être fixée par tout moyen, par exemple un collage sur les dents réelles. Dans ce cas, un tel collage est naturellement temporaire puisque la maquette est prévue pour une fixation temporaire. La colle utilisée diffère d'une colle définitive, et est prévue pour une utilisation à durée limitée, qui peut aller de quelques jours à quelques mois. Cette fixation est réversible. La maquette reste donc bien amovible.

L'invention porte sur un procédé rapide et à bas coût permettant de fabriquer une maquette dentaire, par exemple en plastique, pouvant être mise en bouche et portée provisoirement par le patient.

Ainsi, cette maquette peut être mise en place sur le patient en cabinet, qui peut immédiatement voir in vivo le résultat final envisageable, et prendre sa décision concernant le traitement esthétique proposé de façon éclairée.

Le procédé de réalisation d'une maquette de la restauration dentaire envisagée est mis en oeuvre par un système comportant ici les éléments suivants :
- un dispositif de capture d'images 1,
- un dispositif de commande 2 et
- un dispositif de fabrication 3.

Le procédé de fabrication comprend une première étape E1 d'obtention de données numériques initiales relatives à tout ou partie d'une dentition d'un patient. La dentition a une apparence esthétique, ou morphologie, ou aspect esthétique, initiale. Par les termes « apparence esthétique », on entend faire référence à la morphologie et/ou l'aspect esthétique des dents du patient. L'apparence esthétique peut être définie par différentes caractéristiques esthétiques qui comprennent par exemple la couleur des dents, leur forme et leur taille, ainsi que la dimension d'espaces interdentaires. On peut également inclure dans l'apparence esthétique de légers chevauchements de dents qu'il est possible de dissimuler au moyen de facettes dentaires. En toute hypothèse, ces caractéristiques esthétiques définissant l'apparence esthétique des dents du patient sont des caractéristiques susceptibles d'être modifiées par un traitement dentaire (ou une « restauration dentaire esthétique») à base de facettes fixées sur les dents.

L'étape E1 comprend une sous-étape de capture d'images E10 lors de laquelle le dispositif de capture d'images 1 prend des images numériques IMᵢ (avec i=1, 2, ...N où N est le nombre total d'images capturées) de tout ou partie de la dentition dans son apparence initiale. Les images prises contiennent des caractéristiques des dents, notamment des caractéristiques relatives à tout ou partie des attributs suivants : forme, couleur, espace interdentaire, position (pour la dissimulation de légers chevauchements notamment). Ces attributs sont représentatifs de l'aspect esthétique des dents concernées. Le dispositif de capture d'images 1 est avantageusement une caméra intra-buccale destinée à prendre des images directement à l'intérieur de la bouche du patient. En variante, on peut fabriquer au préalable un modèle tridimensionnel de tout ou partie de la dentition du patient, de façon connue, par moulage réalisé à partir d'une empreinte de la dentition, puis prendre des images numériques du modèle à l'aide du dispositif de capture d'images.

Les données d'images IMᵢ (avec i=1, 2, ...,N) représentent tout ou partie de la dentition du patient dans son apparence initiale. Elles sont transmises au dispositif de commande 2 et reçues par le dispositif de commande 2, lors d'une sous-étape de transmission E11.

L'étape E1 de numérisation de la dentition et de transmission de données numériques initiales IMᵢ est suivie d'une étape E2 de représentation 3D virtuelle de tout ou partie de ladite dentition du patient, à partir des données numériques initiales reçues (c'est-à-dire les données d'image IMᵢ). Un composant du dispositif de commande 2 traite les données d'image reçues IMᵢ et génère un ensemble de données numériques initial, noté DATA₀, représentant un modèle tridimensionnel virtuel initial MOD₀. Ce modèle MOD₀ représente virtuellement tout ou partie des dents du patient selon leur apparence initiale (notamment forme, couleur, espace interdentaire, position). Il est représenté virtuellement, par exemple par affichage sur un écran du dispositif de commande 2, afin de permettre à un opérateur de le visualiser et de le manipuler virtuellement.

L'étape de représentation E2 est suivie d'une étape E3 de modification virtuelle de la dentition modélisée (en tout ou partie). L'étape de modification permet de modifier l'apparence esthétique des dents modélisées. Elle est donc adaptée pour apporter des modifications esthétiques à la dentition réelle modélisée. Ces modifications correspondent ici à des modifications susceptibles d'être apportées ultérieurement par la pose de facettes dentaires sur une ou plusieurs dents. Les caractéristiques dentaires modifiables peuvent être morphologiques et/ou esthétiques. Elles portent par exemple sur l'une au moins des caractéristiques esthétiques suivantes :
- une couleur de dent ;
- une forme et/ou une taille (ou dimension) de dent, par exemple dans le cas de dents usées, cassées, trop courtes, ou autres défauts de de type ;
- une dimension d'un espace interdentaire.

La modification E3 peut également permettre de masquer des malpositions dentaires légères telles que de petits chevauchements.

La ou les modifications apportées virtuellement sur une ou plusieurs dents modélisées permettent d'obtenir une apparence esthétique modifiée de la dentition. Cette apparence esthétique modifiée est destinée à améliorer, embellir le sourire de la personne. Elle détermine donc notamment la face vestibulaire de la dentition idéale, corrigée. Ainsi, lors de l'étape E3, on crée un modèle virtuel tridimensionnel MOD₁ d'au moins une partie de la dentition du patient, qui présente une apparence esthétique modifiée par rapport à l'apparence esthétique initiale. Ce modèle MOD₁ est défini par un ensemble de données DATA₁. Ce modèle dessine aussi éventuellement les logements ou formes adaptées pour remplir la fonction de fixation amovible sur au moins une dent existante, sans modification ou traitement de cette dent existante.

Les étapes E2 et E3 sont exécutées par un composant logiciel du dispositif de commande 2. L'apparence modifiée des dents est ici obtenue virtuellement par une manipulation d'une ou plusieurs dents modélisées réalisée par un opérateur à l'aide de moyens d'interface homme-machine 25 du dispositif de commande 2. En remarque, tout procédé de l'état de la technique permettant la définition des facettes esthétiques peut être mis en œuvre. Cette étape peut ainsi être tout ou partie automatisée. Le résultat de cette étape est un ensemble de données numériques représentant un modèle virtuel de l'apparence esthétique corrigée de la dentition du patient.

Le procédé se poursuit par une étape E4 de production d'un fichier de données numériques F₁ représentant virtuellement une maquette dentaire G₁ adaptée à la dentition du patient et reproduisant de façon artificielle la restauration esthétique envisagée selon l'apparence modifiée obtenue à l'étape E3. Par l'expression « adaptée à la dentition du patient », on entend signifier que la maquette est adaptée pour épouser la forme d'au moins une partie des dents existantes du patient. Dans le mode de réalisation permettant une fixation par clippage ou emboîtement de la maquette, la maquette comprend des surfaces adaptées pour épouser la forme d'une ou plusieurs dents supports du patient et les données numériques comprennent la définition géométrique tridimensionnelle de ces surfaces.

Le fichier numérique F₁ représentant la maquette dentaire G₁ contient donc un ensemble de données numériques définissant la structure de la maquette et éventuellement des données utiles à la construction de la maquette G₁. Il est déterminé automatiquement à partir du modèle virtuel MOD₁ de tout ou partie de la dentition du patient ayant l'apparence esthétique modifiée, telle que créée lors de l'étape E3, autrement dit à partir de l'ensemble de données numériques DATA₁. Le fichier numérique F₁ de la maquette G₁ peut donc contenir notamment des données d'instruction destinées à commander la fabrication de la maquette dentaire G₁ par le dispositif de fabrication 3.

La maquette G₁ constitue une maquette de la restauration esthétique dentaire future du patient, cette restauration étant ici destinée à être réalisée par la pose d'une ou plusieurs facettes dentaires sur la face avant visible d'une ou plusieurs dents du patient.

Selon un mode de réalisation, la maquette G1 comprend une partie avant et une partie arrière reliées entre elles et ménageant des logements de réception de dent(s) support(s). Elle est adaptée pour épouser la forme des dents supports de manière à être mise en bouche et portée provisoirement sur au moins une partie de la dentition du patient. La partie avant comprend une paroi destinée à couvrir complètement la surface avant visible d'une ou plusieurs dents du patient. Cette paroi avant reproduit de façon artificielle le résultat final envisageable d'une restauration esthétique au moyen de facettes dentaires, notamment au niveau de sa surface extérieure visible. Elle intègre les caractéristiques modifiées définies lors de l'étape E3 relatives notamment à la forme des dents, à leur couleur, à leur taille et aux espaces interdentaires. La partie arrière peut comporter une paroi adaptée pour recouvrir en tout ou partie l'arrière de la ou des dents supports. Cette paroi peut présenter des zones ajourées. Dans une forme de réalisation avantageuse, seule la partie avant de la maquette est complète (c'est-à-dire couvre complètement la face avant des dents supports logées dans la maquette).

En remarque, l'étape E4 mise en oeuvre dans le cas d'une maquette à clipper sur les dents peut comprendre plusieurs sous-étapes de détermination automatique des contours de la maquette, parmi lesquelles :
- dans une sous-étape E41, les données numériques représentant la forme occlusale de la maquette au niveau des dents supports, sont obtenues en construisant le négatif d'un modèle virtuel MOD₁, représentant tout ou partie de la dentition du patient, établi à l'étape E3 ;
- la maquette est conçue en respectant au mieux l'occlusion des deux arcades dentaires supérieure et inférieure, pour ne pas interférer ou interférer au minimum lors de leur contact en position de bouche fermée. Plus précisément, les faces postérieures de la maquette destinée à l'arcade dentaire supérieure ne s'étendent de préférence pas jusqu'à la limite gingivale. Elles ne comprennent pas de matière au niveau de l'occlusion des dents, c'est-à-dire au niveau de l'appui des dents de la dentition inférieure sur la face linguale des dents de la dentition supérieure. Cette d'occlusion est automatiquement détectée par la reproduction virtuelle de la dentition existante d'une personne, et définit une limite lors du dimensionnement de la paroi postérieure du dispositif de parure dentaire supérieur ;
- dans une autre sous-étape E42, les données numériques représentant une ou les extrémités gingivales de la maquette, côtés vestibulaire et/ou lingual, sont obtenues. Une première approche considère les données numériques du modèle virtuel MOD₁, représentant tout ou partie de la dentition restaurée du patient, établi à l'étape E3, et les extrémités gingivales sont établies à partir des extrémités données par le modèle virtuel. Une seconde approche consiste à fixer des hauteurs de dents moyennes pré-mémorisées dans une mémoire électronique pour certaines catégories de dents, et à baser le calcul des extrémités gingivales sur ces valeurs moyennes et la connaissance du type de dent considéré. Les extrémités gingivales de la maquette sont calculées pour correspondre à la frontière réelle entre la dentition réelle et la gencive réelle. Cette détermination permet d'ajuster au mieux la hauteur des faces antérieures visibles de la maquette.

Selon une variante de réalisation, la maquette reproduit aussi une partie de gencive. Elle comprend ainsi une surface pouvant recouvrir la gencive existante ou une dent existante. Dans cette variante de réalisation, il est ainsi possible de corriger les défauts esthétiques engendrés par une gencive irrégulière, notamment lorsqu'il y a une ou plusieurs dents déchaussées. Cette variante de réalisation permet de redéfinir une limite gingivale continue et esthétique, tout en définissant l'extrémité gingivale optimale de la maquette.

Le procédé passe ensuite à une étape E5 de fabrication de la maquette dentaire, notée G₁. La fabrication est réalisée par le dispositif de fabrication 3. Elle peut utiliser une technique de fabrication par addition de matière, par exemple par impression tridimensionnelle. En variante, elle peut utiliser une technique de fabrication par soustraction de matière. Dans ce cas, la maquette dentaire est par exemple fabriqué par usinage d'un bloc de matière, ou découpe laser ou par jet d'eau. Dans tous les cas, le procédé de fabrication utilise un matériau biocompatible, par exemple de type résine ou céramique, voire un métal.

Lors de l'étape de fabrication E5, le dispositif de fabrication 3 est piloté par des commandes obtenues à partir du fichier numérique correspondant à la maquette dentaire à fabriquer. En l'espèce, le dispositif de commande 2 transmet au dispositif de fabrication 3 des instructions de commande de fabrication (par exemple des instructions de commande d'impression 3D ou des instructions de commande d'usinage, selon la technique utilisée). En variante, le dispositif de commande 2 pourrait transmettre le fichier F₁ au dispositif de fabrication. Dans ce cas, les instructions de commande de fabrication seraient générées à partir du fichier F₁ directement par le dispositif de fabrication.

Le matériau utilisé pour la fabrication de la maquette dentaire peut être un matériau biocompatible. Il est avantageusement recyclable. Cela permet de recycler les maquettes usagées (et finalement peu portées) pour fabriquer de nouvelles maquettes.

Grâce à la production d'un fichier numérique de construction d'une maquette, celle-ci peut être fabriquée directement, sans étape intermédiaire de réalisation d'un modèle tridimensionnel réel de la dentition du patient. Grâce à cela, la maquette peut être fabriquée au cabinet dentiste de façon rapide. Une seule visite chez le dentiste peut même suffire pour obtenir les données initiales DATA₀ représentant la dentition du patient (en tout ou partie), fabriquer la maquette et la faire essayer au patient.

Bien entendu, on pourrait générer plusieurs fichiers numériques F₁, F₂, ..., de construction de plusieurs maquettes dentaires G₁, G₂, ..., pour permettre au patient de tester plusieurs variantes de la restauration esthétique dentaire.

En variante, le procédé peut mettre en oeuvre une étape intermédiaire E4' permettant à un opérateur de visualiser la maquette mise en place virtuellement sur la représentation virtuelle de la dentition existante de la personne, par exemple par l'intermédiaire d'une interface homme machine sur un écran. Cette représentation virtuelle est tridimensionnelle, elle permet à un opérateur de visualiser non seulement la face antérieure du dispositif, pour valider le résultat esthétique obtenu, mais aussi la face arrière pour vérifier la fonction de fixation.

Le dispositif 2 de pilotage de la fabrication d'une maquette comprend les modules suivants :
- un module 20 d'obtention de données numériques initiales représentant tout ou partie d'une dentition ayant une apparence initiale, en l'espèce des données d'image IMᵢ ;
- un module 21 de création de modèles virtuels MOD₀, MOD₁ représentant tout ou partie de la dentition du patient respectivement dans son apparence esthétique initiale et dans au moins une apparence esthétique modifiée par rapport à l'apparence initiale ;
- un module de production 22 apte à produire au moins un fichier de données numériques F₁ représentant une maquette dentaire G₁ adaptée à la dentition du patient et correspondant à une apparence modifiée par rapport à l'apparence initiale, créée par le module 21 ;
- une interface 23 de connexion avec le dispositif de fabrication 3 ;
- un module de pilotage 24 apte à piloter un dispositif de fabrication de la maquette, à partir du fichier de données numériques F₁ ;
- des moyens d'interface homme-machine 25 ;
- une unité centrale (UC) de traitement et de commande 26.

Le module 20 comprend une interface de connexion au dispositif de capture d'images 1 et des moyens de réception des données numériques initiales, contenant des données d'image IMᵢ capturées et transmises par le dispositif de capture d'images 1, et de fourniture de ces données initiales au module 21 de création de modèles virtuels. Les données d'image reçues sont obtenues par des captures d'images de tout ou partie de la dentition du patient à l'aide du dispositif de capture d'image 1. Le module 20 est destiné à mettre en oeuvre l'étape E11 (en réception).

Le module de création de modèles 21 intègre un composant logiciel permettant de :
- créer un premier modèle virtuel tridimensionnel MOD₀ représentant tout ou partie de la dentition du patient avec une apparence initiale ;
- créer au moins un deuxième modèle virtuel tridimensionnel MOD₁ représentant tout ou partie de la dentition du patient ayant une apparence modifiée par modification de caractéristiques esthétiques des dents (notamment forme, couleur, taille, espace interdentaire) ;
- gérer l'affichage des modèles virtuels créés ou en cours de création sur un écran du dispositif 2.

Le module de création 21 est adapté pour mettre en oeuvre les étapes E2 et E3.

Le module de production 22 est destiné à créer un fichier numérique F₁ relatif à un appareil dentaire. Le fichier numérique représente une maquette adapté à la dentition du patient et reproduisant une restauration esthétique dentaire ayant une apparence modifiée, au moins sur la face avant de la dentition, par rapport à la disposition dentaire initiale. Le module de production 22 est adapté pour mettre en œuvre l'étape E4.

L'interface de connexion 23 permet de connecter le dispositif de commande 2 à un dispositif externe 3 de fabrication d'une maquette, par exemple une imprimante 3D.

Le module de pilotage 24 est adapté pour piloter le fonctionnement du dispositif de fabrication 3, à partir d'un fichier numérique produit par le module 22. Il est destiné à transmettre des instructions de commande au dispositif de fabrication 3 pour piloter la fabrication d'un appareil orthodontique. Le module de pilotage 24 est destiné à commander l'exécution de l'étape de fabrication E5 directement à partir du fichier numérique produit.

Les modules 21, 22 et 24 sont des modules logiciels comportant des instructions logicielles pour exécuter les étapes de procédé correspondantes lorsque les modules sont exécutés par l'unité de traitement 26.

L'interface homme-machine 25 comprend un écran d'affichage et/ou tout autre moyen de restitution de données, un clavier et/ou tout autre moyen de saisie de données et/ou de commande, et une interface graphique GUI (de l'anglais « Graphical User Interface »).

Enfin, le dispositif de commande 2 comprend une unité centrale de traitement 26, comprenant ici un microprocesseur, à laquelle tous les éléments 20-25 du dispositif sont connectés et destiné à en contrôler le fonctionnement.

L'invention concerne aussi un système comportant le dispositif de capture d'images 1, le dispositif de commande 2 et le dispositif de fabrication 3. Les trois composants 1, 2 et 3 du système sont ici séparés. Le dispositif de capture d'images 1 et le dispositif de fabrication 3 peuvent être connectés au dispositif de commande par liaison filaire ou sans fil. En variante, le dispositif de capture d'images 1 et/ou le dispositif de fabrication 3 peuvent être intégrés au dispositif de commande 2.

L'invention concerne également un programme d'ordinateur comprenant des instructions de code de programme pour l'exécution des étapes du procédé précédemment décrit lorsque ledit programme est exécuté par une unité de traitement, en l'espèce l'unité 26.

Dans une variante de réalisation, la maquette dentaire pourrait être fabriquée de façon classique par la mise en œuvre des étapes suivantes :
- réalisation d'une empreinte de la dentition et de la mâchoire du patient, par exemple en alginate ou en silicone ;
- fabrication d'un modèle tridimensionnel de la dentition, par exemple en plâtre, par moulage au moyen de l'empreinte réalisée utilisée comme moule ;
- moulage de la maquette dentaire sur le modèle tridimensionnel par thermoformage ;
- éventuellement traitement de la maquette (coloration, lustrage, ou autre traitement esthétique).

Selon une autre variante de réalisation, la maquette pourrait être conçue pour être portée plus longuement, voire former une restauration esthétique quasi définitive ou définitive. Dans ce cas, le clippage sur l'arcade dentaire est choisi très performant, stable et fiable. La maquette reste amovible. Dans une telle variante de réalisation, la maquette devient un dispositif de parure dentaire. Un tel dispositif de parure dentaire peut être destiné à être porté de façon amovible et réutilisable.

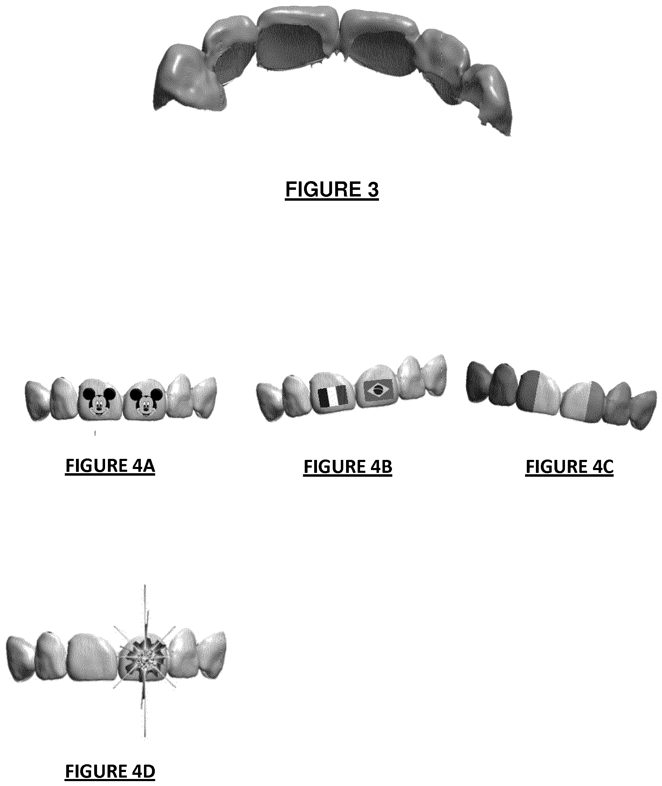

La présente invention concerne donc aussi un dispositif de parure dentaire destiné à être porté de façon amovible et réutilisable par une personne, afin d'améliorer temporairement son sourire, par exemple pendant une journée de travail ou durant une soirée. Après utilisation, le dispositif dentaire peut être enlevé par la personne, notamment la nuit. Il est réutilisable et peut être porté de multiples fois. La figure 3 représente, à titre d'exemple illustratif, un tel dispositif de parure dentaire.

Par dispositif de « parure dentaire » ou « d'habillage dentaire », on entend désigner un dispositif ou appareil dentaire destiné à recouvrir la face vestibulaire (c'est-à-dire celle orientée vers l'extérieur de la bouche) d'une ou plusieurs dents existante d'une personne afin d'améliorer son sourire, autrement dit l'aspect esthétique visible d'au moins une partie de sa dentition existante.

Le dispositif est dépourvu de fonction de traitement orthodontique, notamment de correction de malpositions de dents. Il n'exerce aucune force sur les dents, aucune force susceptible d'entraîner un déplacement d'une dent. De plus, il est conçu pour s'adapter aux dents existantes, sans aucune nécessité de traitement préalable desdites dents.

Le dispositif de parure dentaire peut se présenter comme un appareil dentaire réutilisable, autrement dit à utilisation renouvelable, qui comporte une ou plusieurs faces antérieures de dent, non transparentes, destinées à être superposées sur les faces vestibulaires de dents existantes, dans le but d'améliorer le sourire de la personne, c'est-à-dire l'aspect esthétique de la face visible des dents lors d'un sourire de la personne. Le dispositif de parure dentaire intègre des moyens de fixation amovible sur une ou plusieurs dents existantes, que l'on appellera par la suite dent(s) servant de support ou « dent(s) support(s) ». Il peut être mis en bouche par l'utilisateur lui-même.

Selon une forme de réalisation, les moyens de fixation comprennent un ou avantageusement plusieurs logements ou cavités de réception d'une dent support et de fixation à cette dent support. Ces logements sont destinés à recevoir des dents supports et à se clipper par pincement sur ces dents supports ou à se fixer par simple emboitement sur ces dents supports, afin d'assurer la fixation du dispositif dentaire sur celles-ci. Le dispositif de parure dentaire comprend ainsi un moyen de fixation amovible de type clippage, emboitement. Le logement d'une dent support épouse au moins partiellement la forme de cette dent support. Il épouse la forme d'au moins la face vestibulaire et une partie de la face linguale d'une dent existante. La face postérieure d'un tel dispositif de parure dentaire respecte au mieux l'occlusion naturelle des dents existantes. Dans le cas d'un dispositif de parure dentaire prévu pour l'arcade dentaire supérieure, cette face postérieure ne comprend pas de matière au niveau de l'occlusion de la face linguale des dents existantes, et n'a ainsi aucun impact sur cette occlusion. Il ne s'étend pas jusqu'à la limite gingivale du côté lingual, au contraire de la face vestibulaire. Ainsi, le logement susmentionné n'épouse qu'une partie de la surface périphérique d'une dent.

Autrement dit, un logement de réception d'une dent support est délimité par une paroi antérieure et par une paroi opposée, postérieure, destinée à être orientée du côté lingual. La paroi antérieure porte ou forme la face antérieure de dent visible, destinée à remplir la fonction esthétique. La paroi postérieure est dimensionnée pour ne recouvrir que partiellement la face linguale de la dent support, par exemple seulement une partie supérieure de la dent support (opposée à l'extrémité gingivale de la dent). Ainsi, seule la paroi antérieure est complète, masque la totalité de la face vestibulaire de la dent support. Ces deux parois antérieure et postérieure du dispositif de parure dentaire sont reliées l'une à l'autre par l'intermédiaire d'une paroi occlusale qui s'étend sur la partie supérieure de la dent support. Les parois antérieure, postérieure et occlusale du logement de réception de la dent support et de fixation sur celle-ci sont agencées pour remplir une fonction de clippage, c'est-à-dire de pincement de la dent, ou de simple emboîtement, afin d'assurer la fixation du dispositif dentaire sur la dent support. Lors de sa pose, le dispositif dentaire est donc emboîté légèrement en force sur les dents supports. En remarque, les différentes faces du dispositif de parure dentaire viennent ainsi en contact direct avec la surface de la dent existante qu'elles recouvrent, sans espace intermédiaire ni introduction d'un produit quelconque faisant l'interface.

Il peut y avoir certains logements destinés à seulement recevoir ou loger des dents existantes, sans fonction de fixation sur celles-ci. Le dispositif de parure dentaire comprend avantageusement des parties ne comprenant que des faces antérieures destinées à recouvrir une face vestibulaire de dent, ne remplissant ainsi que la fonction esthétique, sans fonction de fixation. Ces faces antérieures sont reliées latéralement les unes aux autres, pour assurer la continuité du dispositif. Cette approche permet d'obtenir la géométrie la plus simple possible du dispositif de parure dentaire, en minimisant le nombre de logements de fixation au strict minimum pour atteindre une fixation suffisante.

Supposons que le dispositif dentaire concerne N dents d'une personne. Dans une première forme de réalisation, le dispositif de parure dentaire comporte N logements de réception des N dents respectivement et la totalité des N logements est adapté pour assurer une fonction de fixation aux N dents constituant N dents supports. Dans une deuxième forme de réalisation avantageuse, le dispositif comporte N logements de réception de N dents respectivement et seulement un sous-ensemble de ces N logements, comprenant n logements (avec n strictement inférieur à N et de préférence supérieur ou égal à 2), est adapté pour assurer une fonction de fixation à n dents supports. Dans une troisième forme de réalisation, le dispositif dentaire comprend p logements de réception de p dents (avec p strictement inférieur à N et de préférence supérieur ou égal à 2) et N-p parois antérieures non couplées à des parois postérieures. Ces N-p parois se limitent donc à une paroi antérieure, voire comprennent aussi tout ou partie d'une paroi occlusale, voire tout ou partie d'une paroi latérale intermédiaire (entre deux dents), mais pas de paroi postérieure. Les p logements peuvent en tout ou partie être adaptés pour assurer la fixation sur des dents supports.

Les parois du dispositif de parure dentaire sont de préférence peu épaisses, notamment les parois postérieures qui ne remplissent que la fonction de fixation. Les parois antérieures, qui remplissent la fonction esthétique, en complément d'une éventuelle fonction de fixation, présentent une épaisseur variable pour compenser les défauts de la face vestibulaire des dents existantes, cette épaisseur pouvant si nécessaire être importante. Cette épaisseur peut être supérieure ou égale à 0,3 mm, sans véritable limite supérieure. Toutefois, l'effet esthétique souhaité sera en général obtenu à l'aide d'une épaisseur variant dans une fourchette allant de 0,3 à 3 mm inclus. Pour rattraper les défauts esthétiques des dents existantes, ces épaisseurs peuvent varier selon tout ou partie des solutions suivantes :
- Pour une hauteur donnée d'une face antérieure du dispositif de parure dentaire (cette hauteur étant choisie dans la direction allant de la limite gingivale à la limite opposée à la gencive), l'épaisseur de la paroi antérieure peut être variable (c'est-à-dire varier selon une direction droite-gauche) ; et/ou
- Cette épaisseur peut varier de la limite gingivale vers la limite opposée ; et/ou
- Les différentes faces antérieures du dispositif peuvent comprendre des épaisseurs différentes.

En résumé, l'épaisseur de la paroi antérieure d'un dispositif de parure dentaire selon l'invention peut varier dans toutes les directions sur une même face antérieure et/ou sur l'ensemble des faces antérieures.

D'autre part, les parois antérieures sont non transparentes. Elles ont la teinte d'une dent. Les parois postérieures et occlusales peuvent être transparentes ou non transparentes, par exemple avoir également une teinte de dent. Finalement, le dispositif peut avoir différentes formes, comprendre différents matériaux et concerner tout ou partie des dents d'une personne.

Le dispositif de parure dentaire peut être destiné à l'une des dentitions supérieure ou inférieure. Deux dispositifs peuvent être prévus pour respectivement la dentition supérieure et la dentition inférieure d'une personne. Chaque dispositif, comme la maquette décrite précédemment par ailleurs, peut s'étendre sur un nombre quelconque de dents juxtaposées, de préférence au moins d'une canine à l'autre. Un dispositif de parure dentaire est avantageusement symétrique autour d'un plan médian, sa partie droite étant la symétrie de sa partie gauche.

Le dispositif dentaire est adapté pour être mis en bouche et porté de façon amovible et réutilisable. Il est avantageusement adapté pour être porté temporairement sur la dentition existante, sans exercer de fonction de correction de malposition dentaire, notamment sans fonction d'orthodontie ni de tout autre traitement dentaire. Une fois mis en bouche sur une ou plusieurs dents d'un utilisateur, il n'exerce pas sur celles-ci de force suffisante pour provoquer un déplacement des dents au cours du temps. Il a une fonction esthétique d'amélioration du sourire de l'utilisateur. Il peut être porté sans gêne pendant plusieurs heures, par exemple pendant une journée de travail ou une soirée, puis enlevé, notamment la nuit. Il est réutilisable et adapté pour être porté de multiples fois.

Selon une autre forme de réalisation, le dispositif dentaire est réduit à sa forme minimale et ne consiste qu'en la face antérieure visible des dents. Dans ce cas, il peut être fixé par tout autre moyen qu'un clippage, par exemple par un collage direct sur les dents existantes, sans traitement préalable de ces dents. Dans cette réalisation, le moyen de fixation amovible du dispositif de parure dentaire sur au moins une dent existante est un collage, qui n'est pas un collage définitif, est réversible.

Le dispositif de parure dentaire peut aussi être adapté pour une fixation sur un accessoire présent dans la bouche d'une personne, autre qu'une dent existante. Il peut s'agir d'un implant ou d'un pilier sur implant, ou de toute restauration dentaire. Pour cela, le dispositif comprend un moyen de fixation amovible permettant par exemple un clippage sur un tel composant. En variante, ce moyen de fixation amovible peut permettre un ancrage sur un tel composant, notamment dans une direction de déplacement perpendiculaire à la gencive.

Le dispositif de parure dentaire est aussi adaptable à une situation dans laquelle une personne a une (ou plusieurs) dent manquante. Dans un tel cas, le dispositif de parure dentaire peut comprendre un bloc de volume semblable au volume de la dent manquante, de sorte à se clipper entre les deux dents voisines existantes et combler le vide induit par la dent manquante. Ce bloc présente naturellement une face antérieure reproduisant l'aspect esthétique choisi de la dent manquante.

Le dispositif de parure dentaire de l'invention peut être utilisé pour modifier temporairement l'aspect esthétique d'une dentition d'une personne, l'utilisation du dispositif étant renouvelable. Il pourrait également être utilisé pour permettre de visualiser le résultat futur d'un traitement dentaire envisagé pour une personne. Cette personne pouvant porter le dispositif dentaire pendant plusieurs heures, voire une journée entière, il peut ainsi appréhender de façon optimale le résultat escompté du projet de restauration esthétique de sa dentition.

Dans une autre forme de réalisation, une ou plusieurs faces antérieures du dispositif de parure dentaire portent des éléments de décoration, tels que des dessins ou autres représentations graphiques (par exemple tête de Mickey, un drapeau, un diamant) sérigraphiés sur la face antérieure ou une couche colorante décorative, ou plusieurs couches colorantes juxtaposées, recouvrant la totalité de la face antérieure (par exemple des couches bleu / blanc / rouge), comme représenté sur les figures 4A à 4D. Cette décoration peut être obtenue par une peinture particulière, par exemple pour former un effet fluorescent ou phosphorescent. En variante, l'effet décoratif peut être obtenu par le matériau du dispositif de parure dentaire lui-même, qui peut par exemple intégrer des éléments fluorescents ou phosphorescents.

De manière plus générale, les caractéristiques décrites ci-dessus pour un dispositif de parure dentaire peuvent s'adapter à une maquette telle que décrite précédemment, et inversement. D'autre part, l'invention porte aussi sur un procédé de fabrication d'un dispositif de parure dentaire pour un utilisateur, semblable au procédé décrit précédemment pour la fabrication d'une maquette d'une restauration dentaire esthétique d'un patient.

## Revendications

1. Procédé de réalisation d'une maquette d'une restauration dentaire esthétique d'un patient ou d'un dispositif de parure dentaire destiné à être porté de façon amovible, **caractérisé en ce qu'**il comprend les étapes suivantes :
- obtention (E1) de données numériques initiales représentant au moins une partie de la dentition ayant une apparence esthétique initiale ;
- représentation (E2) virtuelle au moins partielle de ladite dentition dans son apparence esthétique initiale, à partir des données initiales ;
- détermination de l'occlusion de la dentition existante et détermination d'une limite géométrique de sorte que la maquette ou le dispositif de parure dentaire induit un impact minimal sur l'occlusion ;
- modification (E3) de l'apparence esthétique virtuelle des dents pour obtenir une apparence esthétique modifiée ;
- élaboration d'un fichier de données numériques représentant la maquette d'une restauration dentaire esthétique ou le dispositif de parure dentaire, adapté(e) pour être mis(e) en bouche et porté(e) provisoirement sur au moins une partie de la dentition existante ;
- fabrication (E5) de la maquette ou du dispositif de parure dentaire directement à partir du fichier de données numériques produit, ladite maquette ou ledit dispositif de parure dentaire comportant au moins une face antérieure de dent, non transparente, destinée à être superposée sur la face vestibulaire d'une dent existante, pour remplir une fonction esthétique, et ladite maquette ou ledit dispositif de parure dentaire comprenant la formation d'au moins un logement épousant au moins partiellement la forme d'une dent existante pour permettre le clippage ou l'emboitement de la maquette ou du dispositif de parure dentaire sur la dent existante, la maquette ou le dispositif de parure dentaire étant adapté(e) pour être clippé(e) ou emboité(e) sur l'arcade dentaire sans fonction de correction de malposition dentaire et ladite maquette ou ledit dispositif de parure dentaire présentant une face antérieure comprenant une épaisseur variable, et/ou variable dans toutes les directions et/ou présentant plusieurs faces antérieures présentant des épaisseurs différentes entre elles pour compenser les défauts de la face vestibulaire des dents existantes.

2. Procédé selon la revendication précédente, **caractérisé en ce que** l'étape de modification (E3) comprend la modification d'au moins une partie des caractéristiques dentaires du groupe comportant une couleur de dent, une forme de dent, une taille de dent et une dimension d'espace interdentaire.

3. Procédé selon l'une des revendications précédentes, **caractérisé en ce que** l'étape de modification (E3) est adaptée pour apporter des modifications esthétiques correspondant à des modifications susceptibles d'être apportées ultérieurement par la pose de facettes sur des dents.

4. Procédé selon l'une des revendications précédentes, **caractérisé en ce qu'**il comprend les sous-étapes suivantes :
- Obtention (E41) de données numériques représentant la forme occlusale de la maquette ou du dispositif de parure dentaire au niveau d'au moins une dent existante servant de support sur laquelle la maquette ou le dispositif de parure dentaire est apte à se clipper ou à s'emboiter ;
- Obtention (E42) de données numériques représentant tout ou partie des extrémités gingivales de la maquette ou du dispositif dentaire, côtés vestibulaire et/ou lingual, et/ou
- représentation tridimensionnelle (E4') virtuelle d'une maquette ou d'un dispositif de parure dentaire sur une interface homme machine.

5. Procédé selon l'une des revendications précédentes, **caractérisé en ce que** l'étape de fabrication (E5) de la maquette ou du dispositif de parure dentaire comprend la formation d'une partie de gencive, dont au moins une partie forme une surface destinée à recouvrir la gencive existante.

6. Procédé selon l'une des revendications précédentes, **caractérisé en ce que** l'étape de fabrication (E5) de la maquette ou du dispositif de parure dentaire comprend la formation de parois comportant une partie avant reliée à une partie arrière et **en ce que** seule la partie avant est complète.

7. Procédé selon l'une des revendications précédentes, **caractérisé en ce que** la maquette ou le dispositif de parure dentaire est fabriqué(e) par :
- une technique d'addition de matière, notamment par impression tridimensionnelle ; ou
- une technique de soustraction de matière, notamment par usinage d'un bloc de matière ou découpe laser ou par jet d'eau ; ou
- moulage par thermoformage sur un modèle tridimensionnel de la dentition.

8. Dispositif de commande (2) pour la fabrication d'une maquette d'une restauration esthétique dentaire d'un patient ou d'un dispositif de parure dentaire, **caractérisé en ce qu'**il comprend un module (20) d'obtention de données numériques initiales représentant au moins une partie de la dentition du patient ayant une apparence esthétique initiale, un module (21) de création de modèles virtuels MOD₀, MOD₁ représentant tout ou partie de la dentition du patient respectivement dans son apparence esthétique initiale et dans au moins une apparence esthétique modifiée par rapport à l'apparence initiale, et une unité centrale (UC) de traitement et de commande (26) configurée pour la mise en œuvre d'un procédé de réalisation d'une maquette d'une restauration dentaire esthétique d'un patient ou d'un dispositif de parure dentaire selon l'une des revendications précédentes.

9. Dispositif selon la revendication précédente, **caractérisé en ce qu'**il comprend un module (21) de représentation virtuelle au moins partielle de la dentition dans son apparence initiale, à partir des données initiales, et un module de modification de l'aspect esthétique virtuel des dents pour obtenir un aspect esthétique modifié.

10. Système de réalisation d'une maquette d'une restauration dentaire esthétique d'un patient ou d'un dispositif de parure dentaire, comportant un dispositif de fabrication (3) d'une maquette dentaire et le dispositif de commande (2) selon l'une des revendications 8 ou 9.

11. Système selon la revendication précédente, **caractérisé en ce qu'**il comprend un dispositif de capture d'images (1).

12. Programme d'ordinateur comprenant des instructions de code de programme pour commander l'exécution des étapes du procédé selon l'une quelconque des revendications 1 à 7, lorsque ledit programme est exécuté par une unité de traitement.

13. Dispositif de parure dentaire destiné à être porté de façon amovible et réutilisable, **caractérisé en ce qu'**il comporte au moins une face antérieure de dent, non transparente, destinée à être superposée sur la face vestibulaire d'une dent existante, et des moyens de fixation amovible du dispositif de parure dentaire sur au moins une des dents existantes servant de support et **caractérisé en ce qu'**il comprend au moins un logement de réception d'une dent support existante, notamment au moins deux logements, comportant une paroi antérieure portant une face antérieure de dent et une paroi postérieure opposée de plus petite surface que la face antérieure, destinée à venir recouvrir la partie extrême de la face linguale de la même dent existante, en ayant un impact minimal sur l'occlusion, le logement épousant au moins partiellement la forme de la dent existante servant de support, les deux parois antérieure et postérieure étant reliées entre elles et agencées pour pincer la dent existante servant de support pour permettre la fixation du dispositif de parure dentaire sur ladite dent existante par clippage ou emboitement, venant se fixer de manière amovible sur ladite dent existante sans traitement ni modification préalable de ladite dent existante et de sorte que ses parois n'exercent aucune force de déplacement de ladite dent existante et **caractérisé en ce qu'**il présente une face antérieure comprenant une épaisseur variable, et/ou une épaisseur variable dans toutes les directions, et/ou présentant plusieurs faces antérieures présentant des épaisseurs différentes entre elles pour compenser les défauts de la face vestibulaire des dents existantes.

14. Dispositif de parure dentaire selon la revendication précédente, **caractérisé en ce qu'**il comprend une pluralité de faces antérieures de dents destinées à être superposées sur les faces antérieures d'une pluralité de dents existantes juxtaposées.

15. Dispositif de parure dentaire selon l'une des revendications 13 à 14, **caractérisé en ce qu'**il présente une partie imitant une gencive, dont au moins une partie forme une surface destinée à recouvrir la gencive existante ou les dents existantes.

16. Dispositif de parure dentaire selon l'une des revendications 13 à 15, **caractérisé en ce qu'**il comprend au moins une face antérieure de dent destinée à être superposée sur la face vestibulaire d'une dent existante et qui ne comprend pas de face postérieure destinée à recouvrir la face linguale de la même dent existante.

17. Dispositif de parure dentaire selon l'une des revendications 14 à 16, **caractérisé en ce que** ladite face antérieure de dent destinée à être superposée sur la face vestibulaire d'une dent existante a une teinte de dent réelle et/ou **en ce qu'**il est réalisé en un matériau recyclable et/ou biocompatible.

18. Dispositif de parure dentaire selon l'une des revendications 14 à 17, **caractérisé en ce que** ladite face antérieure du dispositif de parure dentaire porte un élément de décoration, notamment une représentation graphique sérigraphiée ou au moins une couche colorante recouvrant la totalité de la face antérieure ou une peinture de décoration comme une peinture fluorescente ou phosphorescente, ou **en ce que** le dispositif de parure dentaire comprend un matériau intégrant une propriété de décoration comme des éléments fluorescents ou phosphorescents.

## Patentansprüche

1. Verfahren zur Herstellung eines Modells für eine kosmetische Zahnrestauration eines Patienten oder einer Zahnschmuckstückvorrichtung, die dazu bestimmt ist, entfernbar getragen zu werden, **dadurch gekennzeichnet, dass** es die folgenden Schritte umfasst:
- Erhalten (E1) von digitalen Initialdaten, die mindestens einen Teil des Gebisses mit einem kosmetischen Initialaussehen darstellen;
- mindestens teilweises virtuelles Darstellen (E2) des Gebisses mit seinem kosmetischen Initialaussehen aus den Initialdaten;
- Bestimmen der Okklusion des bestehenden Gebisses und Bestimmen einer geometrischen Grenze derart, dass das Modell oder die Zahnschmuckstückvorrichtung einen minimalen Einfluss auf die Okklusion induziert;
- Modifizieren (E3) des virtuellen kosmetischen Aussehens der Zähne, um ein modifiziertes kosmetisches Aussehen zu erhalten;
- Ausarbeiten einer Datei digitaler Daten, die ein Modell einer kosmetischen Zahnrestauration oder die Zahnschmuckstückvorrichtung darstellen, das oder die dafür geeignet ist, um in den Mund platziert zu werden und provisorisch auf mindestens einem Teil des bestehenden Gebisses getragen zu werden;
- Herstellen (E5) des Modells oder der Zahnschmuckstückvorrichtung direkt aus der erzeugten Datei digitaler Daten, wobei das Modell oder die Zahnschmuckstückvorrichtung mindestens eine nicht transparente anteriore Zahnfläche umfasst, die dazu bestimmt ist, über die vestibuläre Fläche eines bestehenden Zahns gelegt zu werden, um eine kosmetische Funktion zu erfüllen, und wobei das Modell oder die Zahnschmuckstückvorrichtung die Bildung mindestens einer Aufnahme umfasst, die mindestens teilweise die Form eines bestehenden Zahns annimmt, um das Aufklemmen oder Einpassen des Modells oder der Zahnschmuckstückvorrichtung auf den bestehenden Zahn zu gestatten, wobei das Modell oder die Zahnschmuckstückvorrichtung dafür geeignet ist, auf den Zahnbogen ohne Funktion einer Korrektur einer Zahnfehlposition geklemmt oder eingepasst zu werden, und wobei das Modell oder die Zahnschmuckstückvorrichtung eine anteriore Fläche aufweist, die eine variable Dicke umfasst, und/oder variabel ist in allen Richtungen, und/oder mehrere anteriore Flächen aufweist, die voneinander verschiedene Dicken aufweisen, um die Defekte der vestibulären Fläche bestehender Zähne zu kompensieren.

2. Verfahren nach dem vorhergehenden Anspruch, **dadurch gekennzeichnet, dass** der Schritt des Modifizierens (E3) die Modifikation mindestens eines Teils der Zahncharakteristiken der Gruppe umfasst, die eine Zahnfarbe, eine Zahnform, eine Zahngröße und eine Zahnzwischenraumabmessung umfasst.

3. Verfahren nach einem der vorhergehenden Ansprüche, **dadurch gekennzeichnet, dass** der Schritt des Modifizierens (E3) dafür geeignet ist, um kosmetische Modifikationen einzubringen, welche den Modifikationen entsprechen, die letztlich durch die Positionierung von Facetten auf den Zähnen bewirkt werden können.

4. Verfahren nach einem der vorhergehenden Ansprüche, **dadurch gekennzeichnet, dass** es die folgenden Teilschritte umfasst:
- Erhalten (E41) digitaler Daten, welche die okklusale Form des Modells oder der Zahnschmuckstückvorrichtung auf der Ebene mindestens eines bestehenden Zahns darstellen, der als Stütze dient, auf der das Modell oder die Zahnschmuckstückvorrichtung dafür geeignet ist, aufgeklemmt oder eingepasst zu werden;
- Erhalten (E42) digitaler Daten, welche die Gesamtheit oder einen Teil der Zahnfleischenden des Modells oder der Zahnvorrichtung, der vestibulären und/oder lingualen Seiten, darstellen, und/oder
- dreidimensionales virtuelles Darstellen (E4') eines Modells oder einer Zahnschmuckstückvorrichtung auf einer Mensch-Maschinen-Schnittstelle.

5. Verfahren nach einem der vorhergehenden Ansprüche, **dadurch gekennzeichnet, dass** der Schritt des Herstellens (E5) des Modells oder der Zahnschmuckstückvorrichtung das Bilden eines Teils der Gingiva umfasst, von der mindestens ein Teil eine Fläche bildet, die dazu bestimmt ist, die bestehende Gingiva zu bedecken.

6. Verfahren nach einem der vorhergehenden Ansprüche, **dadurch gekennzeichnet, dass** der Schritt des Herstellens (E5) des Modells oder der Zahnschmuckstückvorrichtung das Bilden von Wänden umfasst, die einen vorderen Teil umfassen, der mit einem hinteren Teil verbunden ist, und dadurch, dass nur der vordere Teil komplettiert wird.

7. Verfahren nach einem der vorhergehenden Ansprüche, **dadurch gekennzeichnet, dass** das Modell oder die Zahnschmuckstückvorrichtung hergestellt wird durch:
- eine Technik der Addition von Material, insbesondere durch dreidimensionalen Druck; oder
- eine Technik der Subtraktion von Material, insbesondere durch maschinelle Bearbeitung eines Materialblocks oder Laserschneiden oder durch einen Wasserstrahl; oder
- Formen durch Thermoformen an einem dreidimensionalen Modell des Gebisses.

8. Steuervorrichtung (2) zur Herstellung eines Modells für eine kosmetische Zahnrestauration eines Patienten oder einer Zahnschmuckstückvorrichtung, **dadurch gekennzeichnet, dass** sie umfasst: ein Modul (20) zum Erhalten digitaler Initialdaten, die mindestens einen Teil des Gebisses des Patienten mit einem kosmetischen Initialaussehen darstellen, ein Modul (21) zum Erzeugen virtueller Modelle MOD₀, MOD₁, die das gesamte oder einen Teil des Gebisses des Patienten jeweils mit seinem kosmetischen Initialaussehen und mit mindestens einem modifizierten kosmetischen Aussehen darstellen, das in Bezug auf das Initialaussehen modifiziert ist, und eine Zentraleinheit (UC) zur Verarbeitung und Steuerung (26), die dafür ausgelegt ist, um ein Verfahren zur Herstellung eines Modells für eine kosmetische Zahnrestauration eines Patienten oder einer Zahnschmuckstückvorrichtung nach einem der vorhergehenden Ansprüche durchzuführen.

9. Vorrichtung nach dem vorhergehenden Anspruch, **dadurch gekennzeichnet, dass** sie ein Modul (21) zur mindestens teilweisen virtuellen Darstellung des Gebisses in seinem Initialaussehen aus den Initialdaten und ein Modul zur Modifikation des virtuellen kosmetischen Aussehens der Zähne umfasst, um ein modifiziertes kosmetisches Aussehen zu erhalten.

10. System zur Herstellung eines Modells für eine kosmetische Zahnrestauration eines Patienten oder einer Zahnschmuckstückvorrichtung, umfassend eine Vorrichtung zur Herstellung (3) eines Zahnmodells und die Steuervorrichtung (2) nach einem der Ansprüche 8 oder 9.

11. System nach dem vorhergehenden Anspruch, **dadurch gekennzeichnet, dass** es eine Vorrichtung zur Aufnahme von Bildern (1) umfasst.

12. Computerprogramm, umfassend Programmcodeinstruktionen, um die Ausführung der Schritte des Verfahrens nach einem der Ansprüche 1 bis 7 zu steuern, wenn das Programm von einer Verarbeitungseinheit ausgeführt wird.

13. Zahnschmuckstückvorrichtung, welche dazu bestimmt ist, entfernbar getragen zu werden, und wiederverwendbar ist, **dadurch gekennzeichnet, dass** sie umfasst: mindestens eine nicht transparente anteriore Zahnfläche, die dazu bestimmt ist, über die vestibuläre Fläche eines bestehenden Zahns gelegt zu werden, und Mittel zum entfernbaren Befestigen der Zahnschmuckstückvorrichtung an mindestens einem der als Stütze dienenden bestehenden Zähne, und **dadurch gekennzeichnet, dass** sie umfasst: mindestens eine Aufnahme zum Aufnehmen eines bestehenden Stützzahns, insbesondere mindestens zwei Aufnahmen, umfassend eine anteriore Wand, die eine anteriore Zahnfläche trägt, und eine posteriore Wand, die der kleineren Fläche als der anterioren Fläche gegenüberliegt, welche dazu bestimmt ist, den Endteil der lingualen Fläche desselben bestehenden Zahns zu bedecken, indem ein minimaler Einfluss auf die Okklusion ausgeübt wird, wobei die Aufnahme mindestens teilweise die Form des bestehenden Zahns annimmt, der als Stütze dient, wobei die beiden anterioren und posterioren Wände miteinander verbunden sind und angeordnet sind, um den bestehenden Zahn, der als Stütze dient, einzuklemmen, um die Befestigung der Zahnschmuckstückvorrichtung an dem bestehenden Zahn durch Aufklemmen oder Einpassen zu gestatten, die entfernbar an dem bestehenden Zahn ohne vorherige Behandlung oder Modifikation des bestehenden Zahns angebracht wird, und derart, dass ihre Wände keine Schubkraft auf den genannten bestehenden Zahn ausüben, und **dadurch gekennzeichnet, dass** sie eine anteriore Fläche aufweist, die eine variable Dicke und/oder eine variable Dicke in allen Richtungen umfasst, und/oder mehrere anteriore Flächen aufweist, die voneinander verschiedene Dicken aufweisen, um die Defekte der vestibulären Fläche bestehender Zähne zu kompensieren.

14. Zahnschmuckstückvorrichtung nach dem vorhergehenden Anspruch, **dadurch gekennzeichnet, dass** sie eine Vielzahl von anterioren Zahnflächen umfasst, die dazu bestimmt sind, über die anterioren Flächen einer Vielzahl von nebeneinander angeordneten bestehenden Zähnen gelegt zu werden.

15. Zahnschmuckstückvorrichtung nach einem der Ansprüche 13 bis 14, **dadurch gekennzeichnet, dass** sie einen Teil aufweist, der eine Gingiva imitiert, von der mindestens ein Teil eine Fläche bildet, die dazu bestimmt ist, die bestehende Gingiva oder die bestehenden Zähne zu bedecken.

16. Zahnschmuckstückvorrichtung nach einem der Ansprüche 13 bis 15, **dadurch gekennzeichnet, dass** sie mindestens eine anteriore Zahnfläche umfasst, die dazu bestimmt ist, über die vestibuläre Fläche eines bestehenden Zahns gelegt zu werden, und die keine posteriore Fläche umfasst, die dazu bestimmt ist, die linguale Fläche desselben bestehenden Zahns zu bedecken.

17. Zahnschmuckstückvorrichtung nach einem der Ansprüche 14 bis 16, **dadurch gekennzeichnet, dass** die genannte anteriore Zahnfläche, die dazu bestimmt ist, über die vestibuläre Fläche eines bestehenden Zahns gelegt zu werden, einen realen Zahnfarbton aufweist, und dadurch, dass sie aus einem recyclebaren und/oder biokompatiblen Material hergestellt ist.

18. Zahnschmuckstückvorrichtung nach einem der Ansprüche 14 bis 17, **dadurch gekennzeichnet, dass** die anteriore Fläche der Zahnschmuckstückvorrichtung ein Schmuckelement trägt, insbesondere eine graphische Siebdruckdarstellung oder mindestens eine Farbschicht, welche die Gesamtheit der anterioren Fläche bedeckt, oder eine Schmuckfarbe, wie eine fluoreszierende oder phosphoreszierende Farbe, oder dadurch, dass die Zahnschmuckstückvorrichtung ein Material umfasst, das eine Schmuckeigenschaft, wie fluoreszierende oder phosphoreszierende Elemente, enthält.

## Claims

1. Method for producing a mockup of a patient's dental cosmetic restoration or a dental overlay device intended to be worn removably, **characterized in that** it comprises the following steps :
- obtention (E1) of initial digital data representing at least part of the dentition having an initial aesthetic appearance;
- at least partial virtual representation (E2) of the said dentition in its initial aesthetic appearance, on the basis of the initial data;
- determination of the occlusion of the existing dentition and determination of a geometric limit such that the mockup or the dental overlay device has a minimal impact on the occlusion;
- modification (E3) of the virtual aesthetic appearance of the teeth in order to obtain a modified aesthetic appearance ;
- forming a file of digital data representing the mockup of a dental cosmetic restoration or the dental overlay device, adapted to be placed in the mouth and worn temporarily over at least part of the existing dentition,
- fabricating (E5) of the mockup or the dental overlay device directly from the file of digital data produced, said mockup or dental overlay device comprising at least one non-transparent anterior tooth face, intended to be superposed on the vestibular face of an existing tooth, to perform a cosmetic function, and said mockup or dental overlay device comprising the formation of at least one housing that at least partially conforms to the shape of an existing tooth so that the mockup can be clipped or inset onto the existing tooth, said mockup or dental overlay device being adapted to be clipped or inset to the dental arch without having a function of correcting malpositioning of the teeth, and the said mockup or dental overlay device having an anterior face comprising a thickness that is variable, and/or variable in all directions and/or having several anterior faces having mutually differing thicknesses to compensate for the deficiencies of the vestibular face of the existing teeth.

2. Method according to the preceding claim, **characterized in that** the modification step (E3) comprises modification of at least some of the dental characteristics of the group including a tooth colour, a tooth shape, a tooth size and a dimension of the interdental space.

3. Method according to one of previous Claims, **characterized in that** the modification step (E3) is adapted to make aesthetic modifications corresponding to modifications that can be made later by applying veneers to the teeth.

4. Method according to one of the preceding claims, **characterized in that** it comprises the following substeps:
- Obtention (E41) of digital data representing the occlusal shape of the mockup or of the dental overlay device at at least one existing tooth acting as a support and onto which the mockup or the dental overlay device is able to be clipped or inset;
- Obtention (E42) of digital data representing all or part of the gingival ends of the mockup or of the dental device on the vestibular and/or lingual side, and/or
- virtual three-dimensional representation (E4') of a mockup or of a dental overlay device on a man-machine interface.

5. Method according to one of the preceding claims, **characterized in that** the step (E5) of fabricating the mockup or the dental overlay device comprises the formation of part of a gum, at least part of which forms a surface intended to cover the existing gum.

6. Method according to one of the preceding claims, **characterized in that** the step (E5) of fabricating the mockup or the dental overlay device comprises the formation of walls comprising a front part connected to a rear part, and **in that** only the front part is complete.

7. Method according to one of the preceding claims, **characterized in that** the mockup or the dental overlay device is fabricated by :
- a technique involving the addition of material, notably by three-dimensional printing ; or
- a technique involving the removal of material, notably by machining a block of material or laser or waterjet cutting; or
- moulding from a three-dimensional model of the dentition using thermoforming.

8. Control device (2) for the fabrication of a mockup of a patient's dental cosmetic restoration or of a dental overlay device, **characterized in that** it comprises a module (20) for obtaining initial digital data representing at least part of the patient's dentition having an initial aesthetic appearance, a module (21) for creating virtual models MOD₀, MOD₁ representing all or part of the patient's dentition respectively in its initial aesthetic appearance and in at least one aesthetic appearance that is modified with respect to the initial appearance, and a central control and processing unit (UC) (26) designed for implementing a method for producing a mockup of a patient's dental cosmetic restoration or of a dental overlay device according to one of the preceding claims.

9. Device according to the preceding claim, **characterized in that** it comprises a module (21) for the at least partial virtual representation of the dentition in its initial appearance, on the basis of the initial data, and a module for modifying the virtual aesthetic appearance of the teeth in order to obtain a modified aesthetic appearance.

10. System for producing a mockup of a patient's dental cosmetic restoration or of a dental overlay device, comprising a device (3) for fabricating a dental mockup and the control device (2) according to one of Claims 8 or 9.

11. System according to the preceding claim, **characterized in that** it comprises an image capture device (1).

12. Computer program comprising program code instructions to control the execution of the steps of the method according to any one of Claims 1 to 7 when the said program is executed by a processing unit.

13. Dental overlay device intended to be worn removably and reusably, **characterized in that** it comprises at least one non-transparent anterior tooth face intended to be superposed on the vestibular face of an existing tooth, and means of removable attachment of the dental overlay device to at least one of the existing teeth acting as a support, and **characterized in that** it comprises at least one housing to accommodate an existing support tooth, advantageously at least two housings, comprising an anterior wall bearing an anterior tooth face and an opposite posterior wall of smaller surface area than the anterior face, intended to cover the end part of the lingual face of the same existing tooth, notably while having a minimal impact on the occlusion, the housing at least partially conforming to the shape of the existing tooth acting as a support, the two, anterior and posterior, walls being joined together and designed to grip the existing tooth acting as a support so as to allow the dental overlay device to be attached to the said existing tooth by clipping or insetting, to become attached removably to an existing tooth with no prior treatment or modification of the said existing tooth and so that its walls do not apply any force for moving the existing teeth, and **characterized in that** it has an anterior face comprising a thickness that is variable, and/or variable in all directions, and/or having several anterior faces having mutually differing thicknesses to compensate for the deficiencies of the vestibular face of the existing teeth.

14. Dental overlay device according to the preceding claim, **characterized in that** it comprises a plurality of anterior tooth faces intended to be superposed on the anterior faces of a plurality of juxtaposed existing teeth.

15. Dental overlay device according to one of Claims 13 to 14, **characterized in that** it has a part imitating a gum, of which at least part forms a surface intended to cover the existing gum or the existing teeth.

16. Dental overlay device according to one of Claims 13 to 15, **characterized in that** it comprises at least one anterior tooth face intended to be superposed on the vestibular face of an existing tooth and which has no posterior face intended to cover the lingual face of that same existing tooth.

17. Dental overlay device according to one of Claims 14 to 16, **characterized in that** the said anterior tooth face intended to be superposed on the vestibular face of an existing tooth has a real-tooth coloration and/or **in that** it is made from a recyclable and/or biocompatible material.

18. Dental overlay device according to one of Claims 14 to 17, **characterized in that** the said anterior face of the dental overlay device bears a decorative element, notably a screen-printed graphic depiction or at least one colouring layer covering the entirety of the anterior face or a decorative paint such as fluorescent or phosphorescent paint, or **in that** the dental overlay device comprises a material incorporating a decorative property such as fluorescent or phosphorescent elements.
